# EUROPEAN PATENT APPLICATION

(11) **EP 4 759 529 A1**
(43) Date of publication of application: **17.06.2026**
(21) Application number: 25205670.0
(22) Date of filing: 30.09.2025
(51) Int. Cl.: B29D 30/06

(54) **TIRE VULCANIZING APPARATUS**

(30) Priority: 13.11.2024 JP 2024198379
(71) Applicant: Sumitomo Rubber Industries, Ltd., Kobe-shi, Hyogo 651-0072 (JP)
(72) Inventor: HASHIMOTO, Yuto, Kobe-shi, Hyogo, 651-0072 (JP); SAKAMOTO, Masayuki, Kobe-shi, Hyogo, 651-0072 (JP); KOJIMA, Ryoji, Kobe-shi, Hyogo, 651-0072 (JP)
(74) Representative: Manitz Finsterwald Patent- und Rechtsanwaltspartnerschaft mbB

(57) **Abstract**

The tire vulcanizing apparatus 100 comprises: a vulcanization mold 1 for vulcanization-molding the outer surface of an unvulcanized tire T; a vulcanization bladder 2 being expandable within the inner cavity of the unvulcanized tire 2 to press the unvulcanized tire T against the vulcanization mold 1; a heating device 3 for heating the heat transfer medium G; a supply device 4 for supplying the heated thermal medium G into the inside of the vulcanization bladder 2; and a volume decreasing means 5 disposed in the vulcanization bladder 2 to decrease the volume of a filling space GS to be filled with the thermal medium G.

## Description

### Technical field

The present invention relates to a tire vulcanizing apparatus.

### Background art

There has been known a technique for vulcanizing a tire by using a heat transfer medium (for example, see Patent Document 1).

### Prior art document

### Patent Documents

Patent Document 1: Japanese Patent Application Publication No. 2019-038197

### Summary of the Invention

### Problems to be solved by the Invention

In the apparatus disclosed in Patent Document 1, a heat transfer medium (steam) is supplied through a supply passage formed in a tubular support body which supports a center shaft, and fills the inside of a bladder, and thereby, an unvulcanized tire is vulcanized.

The internal space of such bladder has a large volume, therefore, a significant amount of heat transfer medium which does not substantially contribute to the vulcanization of the unvulcanized tire is filled at high pressure. This makes it difficult to efficiently vulcanize the tires with less energy.

The present invention was devised in view of the above-mentioned circumstances, and an primary objective of the present invention is to provide a tire vulcanizing apparatus capable of vulcanizing an unvulcanized tire efficiently with less energy.

### Means for solving the Problems

According to the present invention, a tire vulcanizing apparatus comprises:
a vulcanization mold for vulcanization-molding an outer surface of an unvulcanized tire;
a vulcanization bladder which is inflated within an inner cavity of the unvulcanized tire to presses the unvulcanized tire against the vulcanization mold;
a heating device for heating a heat transfer medium,
a supply device which supplies the heated heat transfer medium to the inside of the vulcanization bladder; and
a volume decreasing means arranged in the bladder to decrease the volume of a space of the vulcanization bladder to be filled with the heat transfer medium.

### Effects of the Invention

In the tire vulcanizing apparatus according to the present invention, owing to the above-described configuration, it is possible to vulcanize the unvulcanized tire efficiently with less heat transfer medium, namely, with less energy.

### Brief description of the Drawings

FIG. 1 is a cross-sectional view of a tire vulcanizing apparatus as an embodiment of the present invention.
FIG. 2 is a cross-sectional view of a modified example of the tire vulcanizing apparatus shown in FIG. 1.
FIG. 3 is a cross-sectional view of another modified example of the tire vulcanizing apparatus shown in FIG. 1.
FIG. 4 is a cross-sectional view of yet another modified example of the tire vulcanizing apparatus shown in FIG. 1.
FIG. 5 is a cross-sectional view of yet still another modified example of the tire vulcanizing apparatus shown in FIG. 1.

### Detailed description of the Invention

Hereinafter, embodiments of the present invention will be described in detail in conjunction with accompanying drawings.

Note that the drawings may contain representations being exaggerated and/or being differ from the actual dimensional ratios of structures to aid in understanding the contents of the present invention.
Further, throughout the embodiments, the same or common elements are denoted by the same reference numerals, and redundant descriptions are omitted.
Furthermore, the specific configurations illustrated in the embodiments and drawings are only for understanding the contents of the present invention, thus, the present invention is not limited to the illustrated specific configurations.

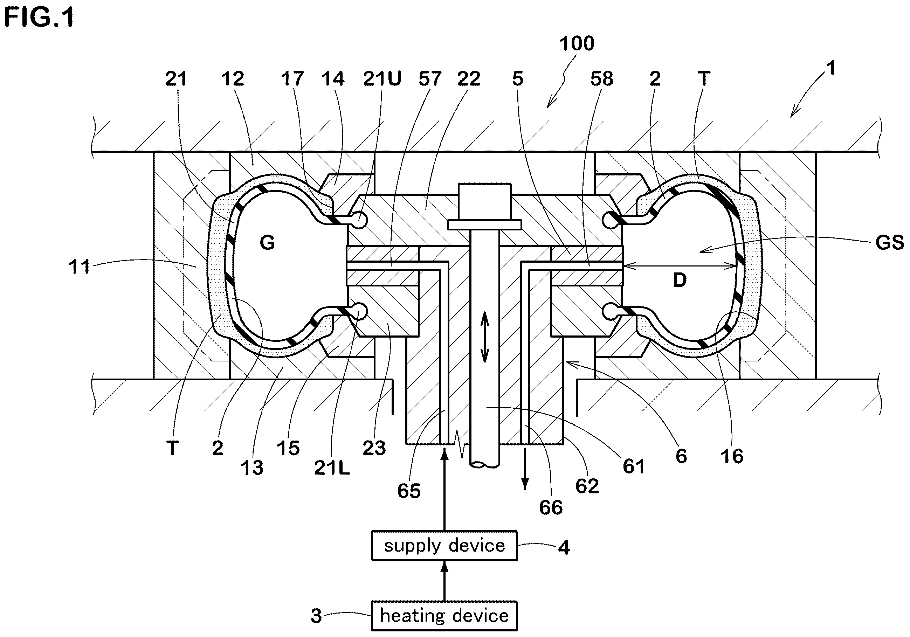

FIG. 1 is a cross-sectional view showing a schematic configuration of a tire vulcanizing apparatus 100 as an embodiment of the present invention.

The tire vulcanizing apparatus 100 comprises a vulcanization mold 1, a vulcanization bladder 2, a heating device 3, a supply device 4, and a volume decreasing means 5.

The vulcanization mold 1 is for vulcanization-molding the outer surface of the unvulcanized tire T.

The vulcanization mold 1 in this example includes a tread mold 11 for molding the tread portion of the tire, upper and lower sidewall molds 12 and 13 for molding the sidewall portions of the tire, and upper and lower bead ring molds 14 and 15 for molding the bead portions of the tire.
The tread mold 11 is divided in the tire circumferential direction into a plurality of sectors.
The vulcanization mold 1 is provided, in the inner surface thereof, with a molding surface 16 which comes into contact with the outer surface of the unvulcanized tire T.

The vulcanization mold 1 is not limited to the example illustrated in FIG. 1. For example, a so-called two-piece structure in which the mold is divided into two piece, namely, an upper piece and a lower piece, may be employed.

It is preferable that the vulcanization mold 1 is configured to be heated using electric energy as the heat source.
The vulcanization mold 1 in the present embodiment is heated by, for example, electric heaters or the like which are built into pushers arranged around the outer periphery of the tread mold 11, platens holding the sidewall molds 12 and 13, and the like. Thereby, the vulcanization mold 1 can be heated efficiently with less energy, and the heated vulcanization mold 1 can vulcanize the unvulcanized tire T from the outer side.

The vulcanization bladder 2 is placed in the inner cavity of the unvulcanized tire T. The vulcanization bladder 2 has a toroidal shape when inflated and is supported by a support mechanism 6.

The vulcanization bladder 2 has a main body 21 which is able to expand and contract as the internal pressure thereof is increased and decreased, and the upper edge 21U of the main body 21 is supported by a support device 22, and the lower edge 21L of the main body 21 is supported by a support device 23.
The main body 21 is made of a stretchable material, e.g. vulcanized rubber and the like.

The support mechanism 6 comprises a center part 61 which is movable up and down, and a cylindrical part 62 which supports the center part 61.
The support device 22 is connected to the center part 61.
The support device 23 is connected to the cylindrical part 62.
The filling space GS in which the heat transfer medium G is filled, is defined by the inner surface of the vulcanization bladder 2 and a surface of the support mechanism 6 facing the inside of the bladder.

The heat transfer medium G is heated by the heating device 3.
As the heat transfer medium G, for example, inert gases such as nitrogen, argon gas, and helium can be employed.
Further, steam (water vapor) can be employed as the heat transfer medium G. Furthermore, it is possible to employ the inert gas and steam so as to be mixed inside the vulcanization bladder 2.

It is preferable that the heating device 3 uses electric energy as the heat source for heating the heat transfer medium G. This is achieved, for example, by including an electric heater for heating the heat transfer medium G in the heating device 3. Thereby, it is possible to heat the heat transfer medium G efficiently with less energy.
Moreover, energy consumption can be suppressed when the heat transfer medium G is not being heated, so energy efficiency can be improved even more easily.

The supply device 4 comprises a compressor for compressing the high-temperature heat transfer medium G to send it to the filling space GS of the vulcanization bladder 2. If required, the supply device 4 further comprises a tank for accumulating the compressed high-pressure, high-temperature heat transfer medium G.

The supply device 4 is connected to the cylindrical part 62.
The cylindrical part 62 is provided with a supply flow path 65 and a discharge flow path 66.
In the present embodiment, the supply flow path 65 and the discharge flow path 66 communicate with a pipe 57 and a pipe 58, respectively, which are formed in the volume decreasing means 5 described later. And the pipes 57 and 58 communicate with the filling space GS.

The supply device 4 supplies the heat transfer medium G heated by the heating device 3 to the filling space GS of the vulcanization bladder 2 through the supply flow path 65 and the pipe 57.
Then, the heat transfer medium G after being used for vulcanization is discharged to the outside of the vulcanization mold 1 through the pipe 58 and the discharge flow path 66.

As the heated high-pressure heat transfer medium G is supplied, the main body 21 of the vulcanization bladder 2 becomes heated and inflated.
As the main body 21 is inflated, the main body 21 comes into contact with the inside of the unvulcanized tire T. And then, the further inflated main body 21 presses the unvulcanized tire T against the molding surface 16 of the unvulcanized tire T.

At the same time, the main body 21 of the vulcanization bladder 2 transfers the heat supplied from the heat transfer medium G to the unvulcanized tire T to vulcanize the unvulcanized tire T from the inside.

In order to decrease the volume of the filling space GS to be filled with the heat transfer medium G, the volume decreasing means 5 is arranged in the annularity center of the vulcanization bladder 2.

In the present embodiment, the volume decreasing means 5 is connected to and supported by the cylindrical part 62, and functions as a filler filling the space between the upper support device 22 and the lower support device 23.

In the conventional tire vulcanizing apparatus which does not have the volume decreasing means 5 (see Patent Document 1, Fig. 1), the heat transfer medium filled in the space formed in the support mechanism 6 hardly contributes to the heat transfer via the vulcanization bladder 2. Therefore, even if there is no heat transfer medium filling such space, the effect on the vulcanization time etc. is extremely limited.

In the tire vulcanizing apparatus 100 according to the present invention, therefore, owing to the volume decreasing means 5, the volume of the heat transfer medium G filled in the filling space GS is reduced, and the unvulcanized tire T can be vulcanized efficiently with less energy.

From the point of view of efficiently vulcanizing the tires using even less energy, the distance D between the volume decreasing means 5 and the radially inner circumferential surface of the vulcanization bladder 2 when fully inflated for the vulcanization may be set to not more than 10 cm when measured in the radial direction of the mold (corresponding to the tire radial direction) as shown in FIG. 1.
Further, from the same point of view, the distance D may be set to not less than 80% of the inner diameter of the tire T (bead diameter) to obtain the sufficient effect of reducing the heat transfer medium G filled in the filling space GS, and thereby, it becomes possible to efficiently vulcanize the unvulcanized tire T with even less energy.

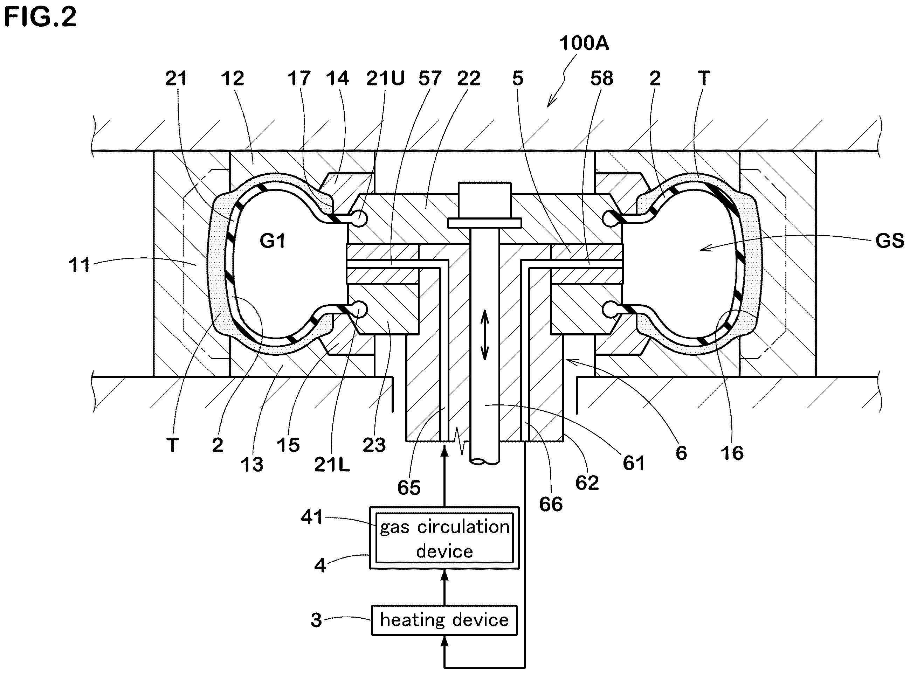

FIG. 2 is a cross-sectional view of a tire vulcanizing apparatus 100A as a modification of the tire vulcanizing apparatus 100 shown in FIG. 1.

For parts of the tire vulcanizing apparatus 100A not described below, the descriptions of the above-described corresponding parts of the tire vulcanizing apparatus 100 may be applied.

In the tire vulcanizing apparatus 100A, the heat transfer medium G is an inert gas G1.
The discharge flow path 66 of the cylindrical part 62 is connected to an inlet port of the heating device 3.
The heating device 3 collects and reheats the inert gas G1 discharged from the filling space GS, and sends it to the supply device 4 from an outlet port.

The supply device 4 receives the inert gas G1 heated by the heating device 3 and sends it to the filling space GS again. That is, the supply device 4 constitutes a gas circulation device 41 circulating the inert gas G1 between the heating device 3 and the filling space GS of the vulcanization bladder 2.

In the tire vulcanizing apparatus 100, namely, the previous example, the steam as the heat transfer medium G releases latent heat when a phase transition occurs from gas to liquid, and this heat is utilized as part of the heat for vulcanization.

In the tire vulcanizing apparatus 100A in this example, since the inert gas G1 is used as the heat transfer medium G, latent heat cannot be used as the heat source for vulcanization. In general, vulcanization made without utilizing the latent heat of steam as the heat source will take a long vulcanization time.

Therefore, in the tire vulcanizing apparatus 100A, during the progress of the vulcanization process, by circulating the inert gas G1 with the gas circulation device 41, the inert gas G1 recovered from the filling space GS is reheated by the heating device 3 and again supplied to the filling space GS. Thereby, the filling space GS is always filled with the high-temperature inert gas G1 used as a heat source for vulcanization to make up for the heat consumed by the vulcanization bladder 2 and the unvulcanized tire T. Therefore, without using steam as the heat transfer medium, it is possible to efficiently increase the temperature of the vulcanization bladder 2 and the unvulcanized tire T to speed up the vulcanization process.

The volume decreasing means 5 decreases the volume of the inert gas G1 filled in the filling space GS, thereby reducing the amount of heat to be generated by the heating device 3 in order to heat the inert gas G1.
This makes it possible to vulcanize the unvulcanized tire T efficiently with even less total energy.

Furthermore, in this embodiment, as the volume of the filling space GS is decreased by the volume decreasing means 5, it becomes possible to increase the pressure in the filling space GS in a short period of time.

In the tire vulcanizing apparatus 100A, the vulcanization mold 1 and the heating device 3 both utilize electricity as the thermal energy source, and steam is not used as the heat transfer medium G for vulcanization. Therefore, the need to install piping or the like for supplying steam is eliminated, and as a result, it possible to easily simplify the equipments in tire vulcanization plant.

As already explained, in the tire vulcanizing apparatus 100A of the present embodiment, the amount of heat consumed by the unvulcanized tire T etc. is resupplied by circulating the high-temperature inert gas G1. Therefore, in order to vulcanize the unvulcanized tire T in a short time, it is desired that the heating device 3 has high output, and the gas circulation device 41 has high circulation power.

The gas circulation device 41 is desirability configured to have the ability to replace the inert gas G1 in the filling space GS within 5 minutes.
The expression "replace the inert gas G1" means that the substantially entire amount of the inert gas G1 in the filling space GS of which heat is consumed is substantially replaced by the heated inert gas G1 while maintaining the pressure in the filling space GS. For example, it is desirable that, during vulcanizing the unvulcanized tire T, the volume of the inert gas G1 supplied per minute by the gas circulation device 41 to the filling space GS via the supply flow path 65 is not less than 1/5 times the volume of the filling space GS. Thereby, the temperature of the unvulcanized tire T rises rapidly, and it becomes possible to vulcanize the unvulcanized tire T in a short time.

In order to vulcanize the unvulcanized tire T in even more short time, it is preferable that the gas circulation device 41 is configured to replace the inert gas G1 in the filling space GS within 3 minutes.

Furthermore, it is desirable that the gas circulation device 41 is configured to maintain the pressure in the filling space GS at 2.45 MPa or higher during circulating the inert gas G1 so that the vulcanization bladder 2 presses the unvulcanized tire T against the vulcanization mold 1 with appropriate pressure.

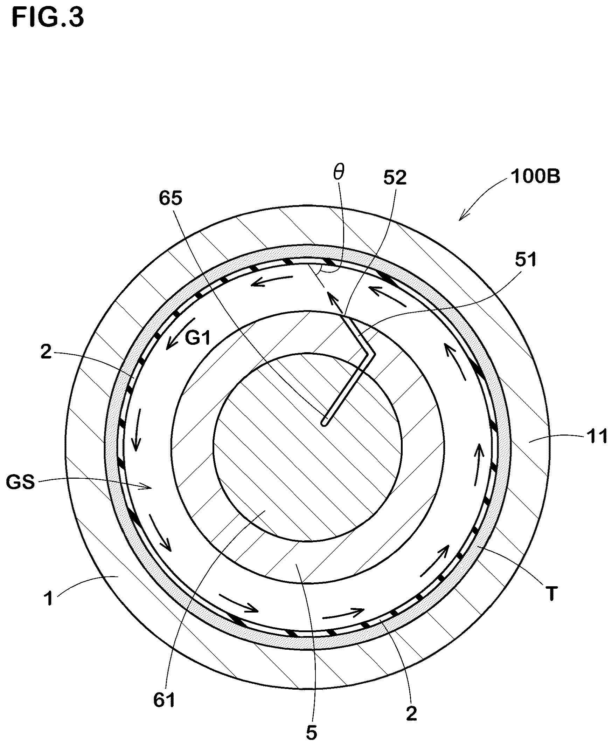

FIG. 3 schematically shows a horizontal cross section of a tire vulcanizing apparatus 100B as a modification of the tire vulcanizing apparatus 100A shown in FIG.2, taken along the center plane of the apparatus 100B corresponding to the tire equatorial plane.
For parts of the tire vulcanizing apparatus 100B not described below, the descriptions of the above-described corresponding parts of the tire vulcanizing apparatus 100A and the tire vulcanizing apparatus 100 may be applied.

In the tire vulcanizing apparatus 100B, the volume decreasing means 5 is provided with a supply flow path 51 communicating with the above-mentioned supply flow path 65 formed in the cylindrical part 62.
The supply flow path 51 is provided with a nozzle 52 at the tip end thereof on the opposite side of the communicating position with the supply flow path 65.
The nozzle 52 is opened to the filling space GS.
The supply flow path 51 blows out the inert gas G1 supplied through the supply flow path 65, from the nozzle 52 into the filling space GS.
The blowout direction of the inert gas G1 can be determined by extending the direction of the liner portion near the opening of the nozzle 52, of the supply flow path 51.

It is preferable that the nozzle 52 is oriented so that the blowout angle θ of the inert gas G1 with respect to the inner circumferential surface of the vulcanization bladder 2 is not more than 60 degrees as shown in FIG. 3.
Since the blowout angle θ of the nozzle 52 is not more than 60 degrees, the inert gas G1 blown out from the nozzle 52 obliquely hits the inner circumferential surface of the vulcanization bladder 2 and flows in the circumferential direction of the vulcanization bladder 2 along the inner circumferential surface.
Thereby, the inert gas G1 is stirred when flowing circumferentially through the filling space GS. Therefore, stagnation of the inert gas G1 is prevented, and temperature unevenness in the vulcanization bladder 2 is suppressed, so it becomes possible to uniformly vulcanize the unvulcanized tire T.

In the tire vulcanizing apparatuses 100, 100A and 100B, it is preferable that the volume decreasing means 5 is configured to be able to expand and contract in the mold radial direction as follows.
When filling the filling space GS with the inert gas G1, the volume decreasing means 5 is expanded radially (increases in diameter), thereby reducing the volume of the heat transfer medium G filled in the filling space GS. This makes it possible to vulcanize the unvulcanized tire T efficiently with even less energy.
When the vulcanization of the unvulcanized tire T is finished, the volume decreasing means 5 is contracted (decreases in diameter) toward the inner side in the mold radial direction than the bead toe molding surface 17 of the vulcanization mold 1. This makes it easy to take out the vulcanized tire T from the vulcanization mold 1.

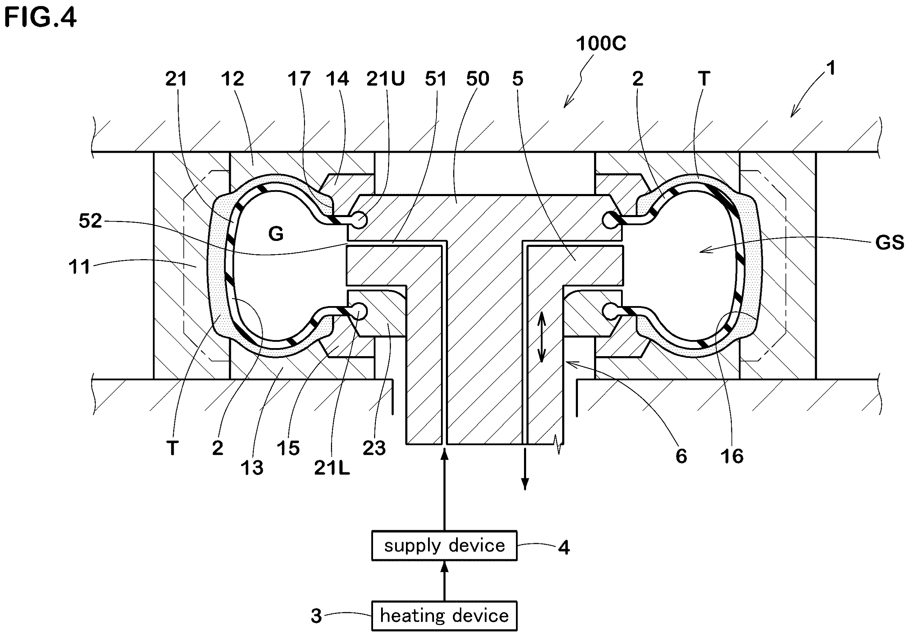

FIG. 4 is a cross-sectional view of a tire vulcanizing apparatus 100C as a further modification of the tire vulcanizing apparatus 100 shown in FIG. 1.
For parts of the tire vulcanizing apparatus 100C not described below, the descriptions of the above-described corresponding parts of the tire vulcanizing apparatus 100, 100A and 100B may be applied.

In this example, the volume decreasing means 5 is preferably formed by a core 50 having rigidity.
Here, the expression "having rigidity" means that the core does not deform when subjected to the high pressure of the inert gas G1 filled in the filling space GS during the vulcanization process.
Such core 50 can be readily achieved by using a metal material such as titanium alloys, stainless steel alloys, aluminum alloys and the like.

As a result of forming the volume decreasing means 5 by the rigid core 50, the supply flow path 51 and the nozzle 52 can be easily formed therein. For example, by making a through hole in the core 50, the supply flow path 51 and the nozzle 52 can be easily formed. Further, as the volume decreasing means 5 is formed by the core 50, it can be easily constructed so as to be able to accurately expand and contract.

The core 50 preferably has a solid structure.
Here, the "solid structure" means a structure which does not have a cavity through which the heat transfer medium G can flow, other than minimum holes constituting the supply flow path 51 and the like.
By forming the core 50 with such solid structure, it is possible to reduce the force pressing the core 50 and thus the sidewall molds 12 and the like when the heat transfer medium G is filled into the filling space GS.

In the tire vulcanizing apparatus 100C of the present embodiment, the core 50 employed is one into which the volume decreasing means 5, the support mechanism 6 and the support device 22 are integrated.
The support device 23 is fixed to the bead ring mold 15 and slidably supports the core 50.

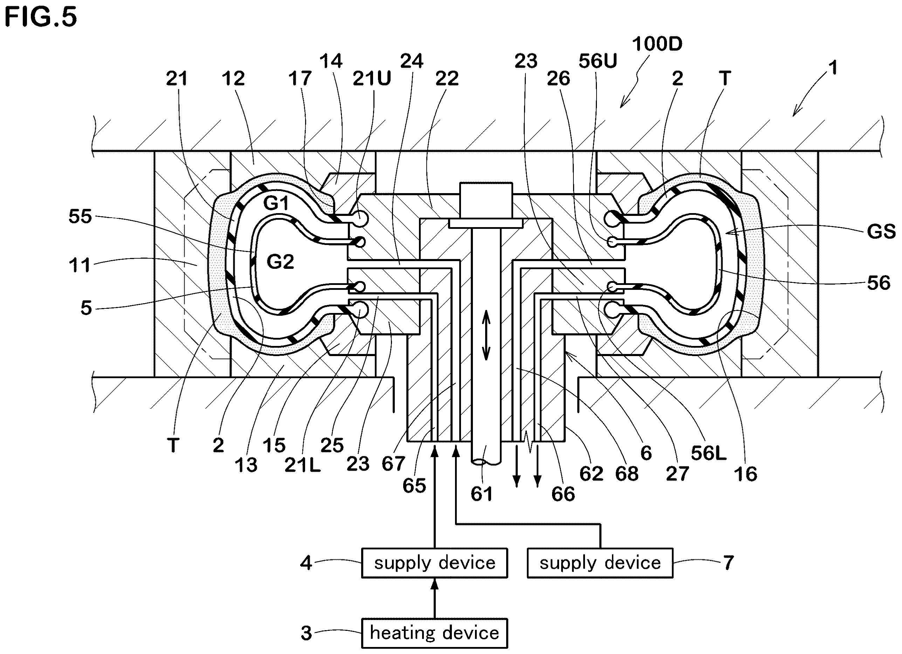

FIG. 5 is a cross-sectional view of a tire vulcanizing apparatus 100D as yet another modification of the tire vulcanizing apparatus 100 shown in FIG. 1.
For parts of the tire vulcanizing apparatus 100C not described below, the descriptions of the above-described corresponding parts of the tire vulcanizing apparatus 100, 100A and 100B may be applied.

In this example, the volume decreasing means 5 includes an inner bladder 55 disposed inside the vulcanization bladder 2.
The inner bladder 55 is made of the same rubber material as the vulcanization bladder 2, and has a main portion 56 being able to expand and contract.
The upper edge 56U and the lower edge 56L of the main portion 56 are supported by the support device 22 and the support device 23, respectively.

The filling space GS in this example is formed between the vulcanization bladder 2 and the inner bladder 55 and filled with the heat transfer medium G heated by the heating device 3.

On the other hand, the inside of the inner bladder 55 is supplied with gas from the supply device 7. Thereby, the inner bladder 55 expands in the inside of the vulcanization bladder 2 to decrease the volume of the filling space GS filled with the heat transfer medium G.

In the tire vulcanizing apparatus 100D, the cylindrical part 62 is further provided with a supply flow path 67 and a discharge flow path 68.
The supply flow path 67 is connected to the supply device 7 .
The gap between the support device 22 and the support device 23 functions as
a flow path 24 which connects the supply flow path 67 with the inside of the inner bladder 55, and
a flow path 26 which connects the discharge flow path 68 with the inside of the inner bladder 55.
Further, the support device 23 is provided with
a flow path 25 which connects the supply flow path 65 with the filling space GS of the vulcanization bladder 2, and
a flow path 27 which connects the discharge flow path 66 with the filling space GS of the vulcanization bladder 2.

As the gas which the supply device 7 supplies to the inside of the inner bladder 55, an inert gas G2 at normal temperature is used, for example.
Here, the "normal temperature" means that the inert gas G2 is not heated by a heating device or the like.

Between the inner bladder 55 and the unvulcanized tire T, there exist the vulcanization bladder 2 and the inert gas G1 as the heated heat transfer medium G, therefore, the unvulcanized tire T is considered to be thermally insulated from the inert gas G2 at normal temperature.
As a result, even if the inert gas G2 is not heated, the vulcanization of the unvulcanized tire T is not hindered by the inert gas G2. Therefore, the heat transfer medium G which requires heating in the vulcanization process is decreased in volume, and the unvulcanized tire T can be vulcanized efficiently with even less energy.

Further, under such a condition that the supply of the inert gas G1 from the supply device 4 is stopped, by supplying the inert gas G2 from the supply device 7, the inert gas G1 in the filling space GS is adiabatically compressed. Thereby, it becomes possible to increase the temperature of the inert gas G1 without using the heating device 3. As a result, it becomes possible to vulcanize the unvulcanized tire T efficiently with even less energy.

After the vulcanization of the unvulcanized tire T is completed, the inert gas G2 is discharged from the discharge flow path 68 communicating with the filling space GS. Thereby, the inner bladder 55 contracts (reduces its diameter) inward in the mold radial direction from the bead toe molding surface 17 of the vulcanization mold 1. As a result, it becomes easy to take out the vulcanized tire.

### Description of the reference signs

1: vulcanization mold
2: vulcanization bladder
3: heating device
4: supply device
5: volume decreasing means
7: supply device
16: molding surface
17: bead toe molding surface
41: gas circulation device
50: core
52: nozzle
55: inner bladder
100: tire vulcanizing apparatus
100A: tire vulcanizing apparatus
100B: tire vulcanizing apparatus
100C: tire vulcanizing apparatus
100D: tire vulcanizing apparatus
D: distance
G: heat transfer medium
G1: inert gas
G2: inert gas
GS: filling space
T: unvulcanized tire

## Claims

1. A tire vulcanizing apparatus comprising:
a vulcanization mold for vulcanization-molding an outer surface of an unvulcanized tire;
a vulcanization bladder being expandable within an inner cavity of the unvulcanized tire to presses the unvulcanized tire against the vulcanization mold;
a heating device for heating a heat transfer medium;
a supply device for supplying the heated heat transfer medium to the inside of the vulcanization bladder; and
a volume decreasing means disposed in the vulcanization bladder to decrease the volume of a filling space to be filled with the heat transfer medium.

2. The tire vulcanizing apparatus according to claim 1, wherein
the heat transfer medium is an inert gas, and
the supply device includes a gas circulation device for circulating the inert gas between the filling space of the vulcanization bladder and the heating device.

3. The tire vulcanizing apparatus according to claim 2, wherein
the gas circulation device is configured to replace the inert gas in the filling space within 5 minutes.

4. The tire vulcanizing apparatus according to claim 2 or 3, wherein
the gas circulation device is configured to circulate the inert gas while maintaining the pressure in the filling space at 2.45 MPa or more.

5. The tire vulcanizing apparatus according to claim 2, 3 or 4, wherein
the volume decreasing means is provided with a nozzle for blowing out the inert gas into the filling space, and
the nozzle is oriented at an angle of 60 degrees or less with respect to an inner circumferential surface of the vulcanization bladder.

6. The tire vulcanizing apparatus according to any one of claims 1 to 5, wherein
in an expanded state of the vulcanization bladder, a distance in a radial direction of the mold between the volume decreasing means and the radially inner circumferential surface of the vulcanization bladder is 10 cm or less.

7. The tire vulcanizing apparatus according to any one of claims 1 to 6, wherein
the volume decreasing means is a core having rigidity.

8. The tire vulcanizing apparatus according to claim 7, wherein
the core has a solid structure.

9. The tire vulcanizing apparatus according to any one of claims 1 to 6, wherein
the volume decreasing means is an inner bladder being able to expand and contract within the vulcanization bladder.

10. The tire vulcanizing apparatus according to any one of claims 1 to 9, wherein
the volume decreasing means is able to contract to the inner side in the radial direction of the mold than a bead toe molding surface of the vulcanization mold.

11. The tire vulcanizing apparatus according to any one of claims 1 to 10, wherein
the vulcanization mold is heated using electricity as an energy source.

12. The tire vulcanizing apparatus according to any one of claims 1 to 11, wherein
the heating device heats the heat transfer medium using electricity as an energy source.
